# EUROPEAN PATENT SPECIFICATION

(11) **EP 2 207 932 B1**
(45) Date of publication and mention of the grant of the patent: **18.03.2015**
(21) Application number: 08846567.9
(22) Date of filing: 23.10.2008
(51) Int. Cl.: D21C 9/06, B01D 33/067, F16J 15/16

(54) **APPARATUS AND METHOD FOR TREATMENT OF PULP**
VORRICHTUNG UND VERFAHREN ZUR BEHANDLUNG EINES ZELLSTOFFS
APPAREIL ET PROCÉDÉ POUR LE TRAITEMENT DE PÂTE

(30) Priority: 09.11.2007 SE 0700247
(43) Date of publication of application: 21.07.2010
(73) Proprietor: Valmet Technologies, Inc., 02150 Espoo (FI)
(72) Inventor: ORGÅRD, Jonas, S-860 13 Stöde (SE); LUNDBERG, Jörgen, S-856 43 Sundsvall (SE)
(74) Representative: Estreen, Lars J.F.
(86) International application number: PCT/SE2008/000608
(87) International publication number: WO 2009/061247

(56) References cited:
- WO-A1-2006/130093
- WO-A1-2006/130097
- WO-A1-2006/130109

## Description

### TECHNICAL FIELD

The present invention relates to a method and an apparatus for force measurement and a washing apparatus for washing and dewatering of cellulosic pulp of the kind having a drum provided with compartments comprising the apparatus. The invention also relates to a method and an apparatus for seal adjustment in a washing apparatus of the above mentioned kind.

### BACKGROUND

In all fiber lines some kind of washing means is incorporated an order to separate the liquor from the digestion of the pulp. Later in the process washing means are provided in order to separate bleaching liquor after bleaching steps. There are a number of different washing equipments working according to different principles.

A well known washing apparatus is the drum washer, wherein the pulp is dewatered on a rotating filter drum after the addition of washing liquid, which displaces the liquor remaining in the liquor after previous process steps, e.g. a digestion step or a bleaching step. A sub pressure inside the drum makes the displaced liquid to pass through a perforated plate arranged on the rotating drum. A development of the original drum washer is the pressurized displacement washer, wherein the filtrate under positive pressure is made to pass the plate. The increased pressure difference brings about a more effective displacement of the filtrate.

According to a previously known construction of a pressurized displacement washer the drum is provided with compartments, extended in the axial direction of the drum and intended to be filled with pulp. The compartments are defined by walls in the form of strips provided axially all along the axis of the drum, and a bottom which is comprised of the perforated plate. The compartment spacing of the drum ensures that the cake of the pulp does not crack and moves, but instead it maintains the formation obtained at the facing. The perforated plate, on which the pulp has settled, is placed at a distance from the main surface of the drum, so that filtrate channels are formed in the space between the drum and the plate. Along the periphery of the drum there are at least as many filtrate channels as there are pulp compartments.

In a drum washer several different washing steps may be performed, with separate addition of washing liquid to the different steps as well as recirculation of filtrate from one step to be used as washing liquid in another. In order to obtain a maximum washing efficiency the aim is that washing liquid intended for a specific washing step is not moved to a later washing step. (A pressure difference between the steps results in that added washing liquid strives to move itself towards the lower pressure.) In order to be able to differentiate different washing step, which are performed in one or several washing zones in the drum, and formation steps, which are performed in the formation zone of the drum, and output steps, which are performed in the output zone of the drum (a dry content increasing zone comprises a first part of the output zone), are the respective zones which are sealed with longitudinal (that is axial) seals. These longitudinal seals are placed between the rotating drum and the surrounding casing. The filtrates from the respective zones are separated by seals in a peripherally end valve provided at one or both end covers.

One problem with drum washers of the kind having zones separated with the aid of longitudinal seals is that these seals are subjected to abrasion, wear and other stresses. The seals changes with time, which has a negative effect on the general washing performance and also leads to the risk of leakage and shutdown.

According to the prior art there is a possibility for the working staff to make manual adjustments of the longitudinal seals. At the positioning of the seals it is accordingly of great help to get continuous and more exact information of the force acting between the drum and the seal during operation.

From the publication SE 528721 C2 it is previously known a unit and a method for adjustment of a seal in a washing apparatus for cellulosic pulp, which method comprises the steps: measuring of a force acting on a longitudinal seal and moving the seal based on the measured force. It is previously known to arrange a measuring device, such as a load cell, between a jack and a seal, in order to be able to accurately record the force acting against a seal in a direction from the drum, and then to move the seal substantially in the radial direction of the drum, based on the measured force. The jack provides for transmission of a driving force, manually or from a motor, to the seal, for the adjustment of the seal. In order to avoid that the load cell and other components are overloaded a spring package is mounted between the load cell and the seal. The spring package is biased with a predetermined force. If this force is exceeded the spring package is compressed. The load cell is mounted between the jack and the force transmission shaft. This means that the load cell cannot be exchanged during operation. Further, the jack has to be dismounted in order to be able to exchange the load cell. Further, the force of the spring is different for every spring package of the respective seal because of different tolerances for different seals, which means that according to the construction that is previously known through SE 528721 C2, it is not possible to determine which bias force is prevailing under operation in the respective spring package.

Thus, there is a demand of an improved solution of the problem of neasuring forces acting on at least one seal in a washing apparatus.

### SUMMARY

A general object of the invention is to provide an improved washing apparatus of the type with a rotary drum provided with compartments. More specifically the object of the invention is to accomplish a safer and more efficient sealing mechanism of the washing apparatus. A further object is to accomplish a novel, more cost effective and simpler means and method for measuring, during operation, the force acting on the longitudinal seal in a radial direction away from the drum. A further object of the invention is to accomplish a method and a means which makes possible the exchange of measuring means without stopping the operation of the washing apparatus.

These objects are achieved according to the accompanying claims.

In short the invention provides a method for force measurement of forces acting on at least one seal with a device in a washing apparatus provided with compartments. The device for force measurement comprises a force transmission shaft, which has an extension substantially through the device, with a first end, adjacent to which the longitudinal seal is intended to be arranged. Further, the device comprises a spring package intended to be biased by the device and a jack for transmission of a driving force to the seal. According to the method an adjustment of at least one longitudinal (i.e. axial) seal can be performed based indirectly on the measured force acting on the load transmission shaft of the force measurement device. From this measured force, a force acting on the longitudinal seal in a direction away from the drum can be extracted. This extraction takes place based on a biasing force of the spring package in the force measurement device, which has been measured in advance during a shutdown, as well as said measured force which during operation acts on the force transmission shaft of the force measurement device. The present invention also relates to a method and a unit for seal adjustment in a washing apparatus, and a washing apparatus.

The force is measured with a measuring means, for example a load cell, a strain gauge or similar means, and based on this measurement the seal is moved when necessary, such as when the seal comes too close to or too far away from the drum because of wear, pressure or form changes of the drum or when a foreign object is between the seal and the drum. The movement of the seal can be performed manually or preferably with the aid of a motor, hydraulics or any other driving means, usually connected to the seal through one or several mediation elements and/or positioning means.

The suggested force measurement of forces acting on at least one sealing means according to the invention makes possible a construction, where the measuring means can be arranged in a position, where it is more accessible, and so that an exchange of the measuring means can be accomplished during operation of the washing apparatus. The construction can thereby be made more cost effective since it is more easy and less costly to exchange a measuring means, which is not built-in into the device for force measurement so that the device has to be disassembled in order to reach the measuring means. Measurement and adjustment of the biasing force of the spring package in the force measurement device are made possible, which reduces the risk for overload. The construction can also be made more cost effective, since less costly measuring means can be used while the measuring means according to one embodiment of the present invention is only exposed to pressure forces. According to another embodiment of the present invention a more compact and less space requiring construction can be accomplished.

According to the present invention the biasing force of the spring package can accordingly be measured in advance, before the washing apparatus is put into operation. This can be accomplished because the measuring means is in indirect connection with the load transmission shaft, preferably through an element mounted on the load transmission shaft. Preferably the measuring means is arranged in connection with the load transmission shaft on the outside of the sealing means and outside the jack on the sealing means. During operation of the washing apparatus the force acting on the load transmission shaft of the force measuring means during operation is measured. The force acting on the longitudinal seal in the direction away from the drum is the biasing force of the spring package less the force measured on the load transmission shaft during operation. The extraction of the force acting against the longitudinal seal in the direction from the drum can then preferably be obtained by subtracting the measured force from the biasing force of the spring package, which has been measured in advance.

According to the present invention a washing apparatus is thus also provided for washing and dewatering of cellulosic pulp, which washing apparatus comprises a rotary drum with a plurality of outer compartments on the drum for pulp to be washed, which compartments are defined by axial compartment walls distributed along the perimeter of the drum, a stationary cylindrical casing, which encloses the drum, whereby an annular space is defined between the casing and the drum and wherein the annular space by longitudinal seals extending in the axial direction of the drum is divided into zones for formation, washing and output of the pulp, which washing apparatus comprises a device for force measurement with measuring means for measuring of the biasing force of the spring package during shutdown and measuring of a force acting on the load transmission shaft during operation; and extraction means for extraction of a force acting on the longitudinal seal in a direction away from the drum, from the measured biasing force of the spring package and the measured force acting on the load transmission during operation.

### SHORT DESCRIPTION OF THE DRAWINGS

The invention as well as further objects and advantages therewith will be best understood with reference to the subsequent description and the accompanying drawings, wherein:
Fig. 1 is a schematic view, in perspective, of a rotary drum provided with compartments, which can be used in a washing apparatus according to the invention;
Fig. 2 is a schematic outline diagram in the form of an axial cross section through a washing apparatus with a drum provided with compartments according to the prior art;
Fig. 3 is a schematic outline diagram in the form of an axial cross section through a washing apparatus with a drum provided with compartments according to an exemplifying embodiment of the invention;
Fig. 4A and 4B show, in an axial and radial cross section, respectively, one part of a washing apparatus with a longitudinal seal as well as a device for force measurement according to one exemplifying embodiment of the invention;
Fig. 5 is a schematic outline diagram of a part of a device for force measrument according to one exemplifying embodiment of the invention;
Fig. 6 is a perspective view of a longitudinal seal provided with two devices for force measurement according to one exemplifying embodiment of the invention;
Fig. 7 is a schematic outline diagram in the form of an axial cross section through a washing apparatus with a drum provided with compartments according to one exemplifying embodiment of the invention; and
Fig. 8 is a schematic block diagram of a unit for seal adjustment, comprising a device for force measurement according to one exemplifying embodiment of the invention.

### DETAILED DESCRIPTION

In the drawing are used the same reference number for similar or corresponding parts.

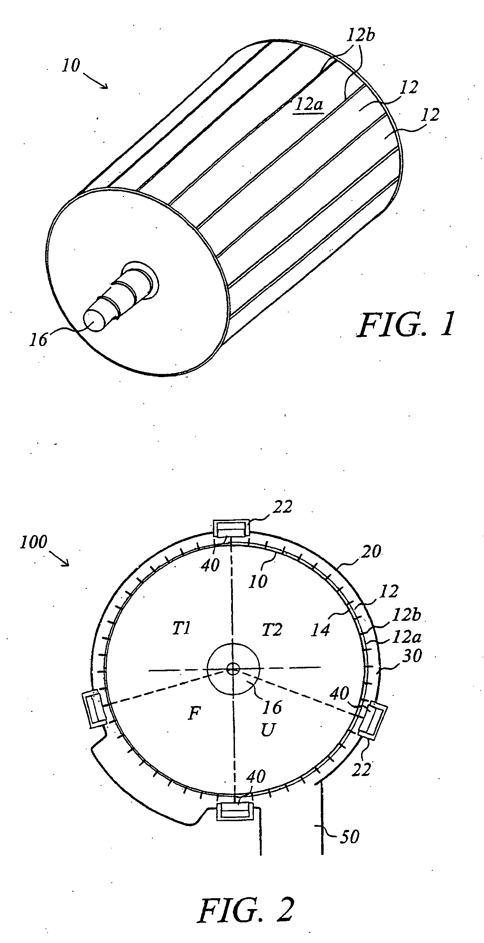

Fig. 1 is a schematic perspective view of a rotary drum provided with compartments which together with a stationary casing might be contained in a pressurized displacement washer according to the invention. A rotary drum 10 provided with a plurality of outer compartments (also called pulp compartments or cells) 12 are shown, in which compartments the paper pulp to be washed is placed when input towards the drum. Each compartment 12 has a bottom 12a of perforated plate and two compartment walls (cell walls) 12b arranged axially in view of the drum shaft 16. At the drum illustrated in Fig. 1 the compartment walls 12b are evenly distributed along the perimeter of the drum. The rotary drum 10 is generally journalled on a stationary stand (not shown) in the washing apparatus and is encased by a cylindrical casing (e.g. 20 in Fig. 2), whereby an annular space 30 is defined between the casing and the drum.

Fig. 2 shows an axial cross section through a washing apparatus with a rotary drum provided with compartments according to the prior art. The washing apparatus 100 comprises a plurality of axial longitudinal seals 40 placed between the rotary drum 10 and the surrounding casing 20. These longitudinal seals 40 seal between the casing 20 and the compartment walls 12b of the compartments and act as separating elements between different zones F, Ta, T2, U of the washing apparatus 100. The function of the seals 40 is of outmost importance, e.g. in order to ensure that washing liquid intended for a specific washing step is not moved to a later washing step, especially when there, under normal conditions, exists a difference in pressure between different washing steps. In Fig. 2 is shown four longitudinal seals 40, which accordingly divide the annular space 30 into four zones, more specifically into a formation zone F for formation of the pulp in compartment 12 of the drum, a first and a second washing zone T1, T2 for washing of the formed pulp, and an output zone U for output of the washed pulp.

Each seal 40 has a width which is somewhat bigger than the distance between two adjacent compartment walls 12b. Accordingly the compartment walls 12b will pass the seal 40 one by one when the drum 10 rotates and the position of the seal is such that it in every moment "covers" either one or two compartment walls 12b. Further, the seal can, seen in an axial direction, e.g. extend principally along the whole drum. Alternatively, the drum may have two (or several) separate seals in an axial direction, such as when the drum is provided with a ring construction, which delimits each compartment into two parts in an axial direction, so that filtrate can be led out from both end covers of the drum.

The rotary drum 10 including its compartment walls 12b is normally made of steel. The longitudinal seals 40 can also be made of a metallic material, but are preferably made of a polymer material, designed to be exchanged with the aid of special parts 22 in the casing 20 that can be opened.

A drum washer 100 of the kind described above works with a continuously rotating drum 10 according to the following principle: Pulp for washing is fed into the formation zone F (inlet is not shown), whereby the pulp places itself in the compartments 12 on the drum 10 as long and narrow rectangles in the axial direction of the drum against the perforated plate forming the compartment bottom 12a. Thanks to the compartment spacing of the drum the formation of the pulp cake is maintained. Washing liquid is added to the annular space 30 and filtrate is pressed out of the mass and passes thereby the perforated plate. This preferably takes place under an overpressure, in order to obtain an improved dewatering of the pulp. The perforated plate is placed at a distance from the drum 10 so that filtrate channels 14 are formed in the space between the drum 10 and the perforated plate. The washing may, as in Fig. 2, be repeated in two or several steps under different pressures and with separated washing liquids. Used liquid is normally fed back to a preceding process step. The washed pulp is output through an outlet opening 50.

As mentioned in the background part the longitudinal seals of the drum washer are subjected to abrasion, wear and other stresses. The seals change with time, which has a negative effect on the general washing performance and also lead to a risk for leakage and shutdown. In particular, it has been observed that the positions of the longitudinal seals of the drum washer are changed and are displaced because of changed operation conditions. Changed operation conditions might cause substantial differences in pressure and/or temperature of the washing apparatus, whereby the drum washer presents form changes. Thereby the respective positions of the seals are changed with respect to the drum and the sealing performance is affected negatively. According to the prior art you are under these circumstances referred to the method according to the patent publication SE528721C2 for adjustment of the seal.

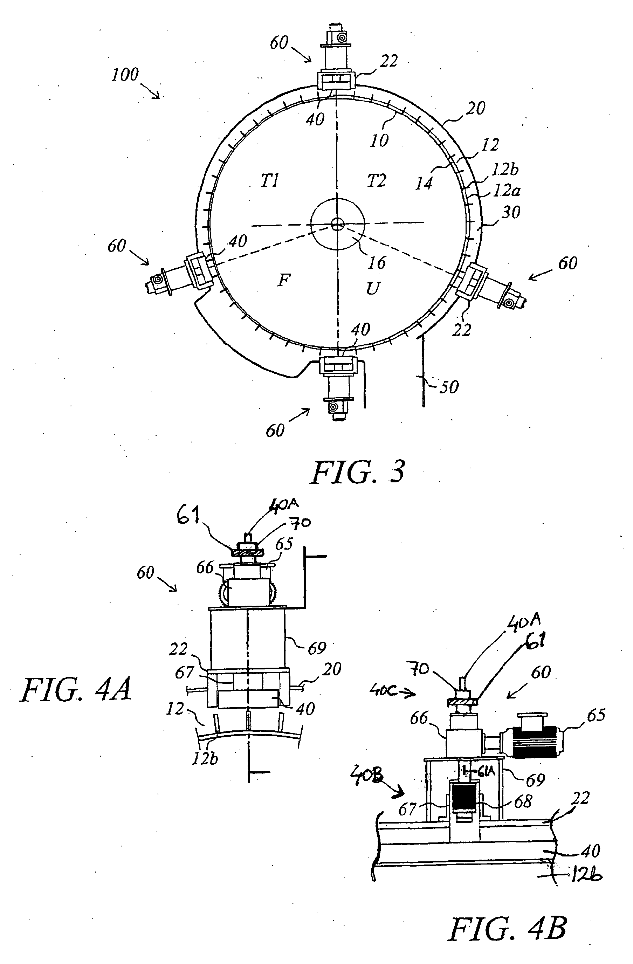

According to a first aspect according to the present invention is suggested a mechanism for force measurement of forces acting on at least one seal in a washing apparatus, which makes possible a more sophisticated handling of the longitudinal seals of the washing drum. According to a second aspect of the present invention is suggested a mechanism for seal adjustment based on an obtained force measurement according to the first aspect of the present invention. Fig. 3 shows a washing apparatus 10 in a cross sectional view, wherein devices 60 for force measurement according to the invention have been arranged in connection with the longitudinal (axial) seals 40.

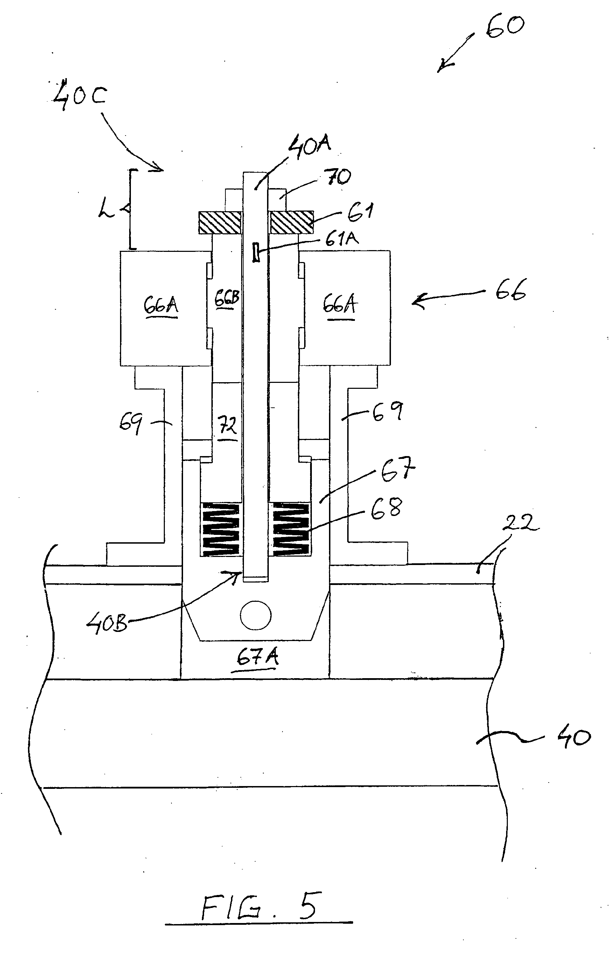

A preferred embodiment of the device 60 for force measurement will now be described with reference to Figs. 4A and 4B, showing part of a washing apparatus with a device for force measurement in an axial and radial cross section, respectively. A longitudinal seal 40 of the kind which seals between zones in the washing drum 10 is shown in a position when it is in contact with a compartment wall 12b. The illustrated device 60 for force measurement comprises a motor 65, a jack 66, a cylinder 67, a spring package 68 and a measuring means such as a load cell 61 or a strain gauge 61 A. A support structure 69 surrounds the spring package 68 and partly also the cylinder 67. The device for force measurement comprises a load transmission shaft 40A, which has an extension substantially through the unit 60 in the radial direction of the drum, with a first outer end 40B in connection with which the longitudinal seal is arranged. The load cell 61 is mounted in connection with the other outer end 40C of the load transmission shaft 40A, on a protruding part L (see Fig. 5) of the load transmission shaft 40A, between the jack 66 and a fastening element 70, such as a nut. This placement allows for the load cell 61 to be removed under operation of the washing apparatus for exchange and repair. According to an alternative embodiment, instead of the load cell 61, a measuring means in the form of a strain gauge 61 A (see also Fig. 5 and the following description), such a filament strain gauge, can be integrated with the load transmission shaft 40A.

The cylinder 67 acts as a positioning means which keeps the longitudinal seal 40 away from the drum, in a radial direction. The movement of the seal 40 in a substantially radial direction is driven by the motor 65, the rotary motion of which is transformed into a linear motion through the jack 66. The jack 66 is connected to the cylinder 67 and in that way the driving power of the motor 65 is transferred to the seal 40. (The function of the spring package 68 is described below.) The function of the load cell 61 and/or the strain gauge 61A is to measure the biasing force of the spring package during shutdowns and during operation to measure the force acting on the last transmission shaft 40A. For that purpose it is preferably placed as in the example connected to the load transmission shaft 40A and outside the jack 66, on the side that is turned in a direction from the casing 20.

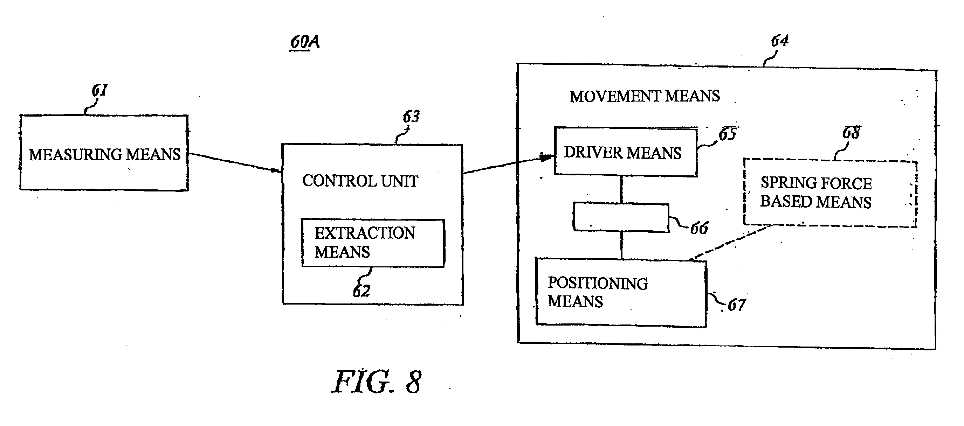

Each device 60 further comprises extraction means (not shown in Figs. 4A-B) for extraction of a force acting against the longitudinal seal in a direction from the drum, from the measured biasing force of the spring package 68 and the measured force acting on the load transmission shaft 40A during operation. Further the units 60 comprise movement means (not shown in Figs. 4A-B; see Fig. 8) in order to move the seal 40 thereafter, which movement is indirectly based on the measured force during operation in relation to the biasing force of the spring package. The force is measured with a measuring means, such as the load cell 62 or similar device, and based on this measurement the seal is moved when necessary, such as when the seal comes too close or too far away from the drum because of wear, pressure or form changes of the drum or when a foreign object is between the seal and the drum.

Fig. 5 shows a schematic outline diagram in an axial perspective view of a device for force measurement of forces acting on at least one seal according to one embodiment of the present invention. The illustrated device 60 for force measurement comprises a longitudinal seal 40 arranged at a casing 20 of a washing apparatus according to the invention. Further, the device 60 comprises a jack 66 with a house 66A and a jack axis 66B. A manual operation or a motor (not shown) drives the jack. The device also comprises a cylinder 67 and a cylinder extension 67A attached to the cylinder 67, in which extension the seal 40 is arranged through the cylinder 67 associated with a first outer end 40B of a load transmission shaft 40A. Further, the device 60 comprises a spring package 68 and a measuring means such as a load cell 61 and/or a strain gauge 61 A. A support structure 69, such as a shelf, surrounds the spring package 68, the jack 66 and partly also the cylinder 67. The load transmission shaft 40A, which biases the spring package 68 is provided to the cylinder 67 and is arranged to extend in a radial direction through the device 60 and through the jack shaft 66B. The load cell 61 is mounted in connection with a second outer end 40C of the load transmission shaft 40A, on a protruding part L of the load transmission shaft 40A, between the jack shaft 66B and a fastener 70, such as a nut. The alternatively used strain gauge 61 A is integrated in the load transmission shaft 40A. The cylinder 67 acts as a positioning means which keeps the longitudinal seal 40 away from the drum in a radial direction. Movement of the seal 40 substantially in a radial direction is accomplished by the motor (not shown), or manually, the rotary motion being mediated into a linear movement through the jack 66. The jack 66 is connected to the cylinder 67 through an extension part 72 and the spring package 68, and in that way the driving force of the motor 65 is transferred to the seal 40. (The function of the spring package 68 will be described below.)

The function of the measuring means, i.e. the load cell 61 or the strain gauge 61A, is to measure the force acting on the load transmission shaft 40A during operation. For that purpose it is thus placed in an indirect connection through the fastener 70 with the load transmission shaft 40A and suitably, as according to the example shown in Fig. 5, in connection through the fastener with the load transmission shaft 40A, placed between the jack 66 and the fastener 70. If for example the load cell 61 or the strain gauge 61A measures a force of 19 kN and the spring package is biased with a force of 20 kN, by extraction a force of 1 kN will be obtained, which is the force acting on the longitudinal seal 40 in a direction from the drum.

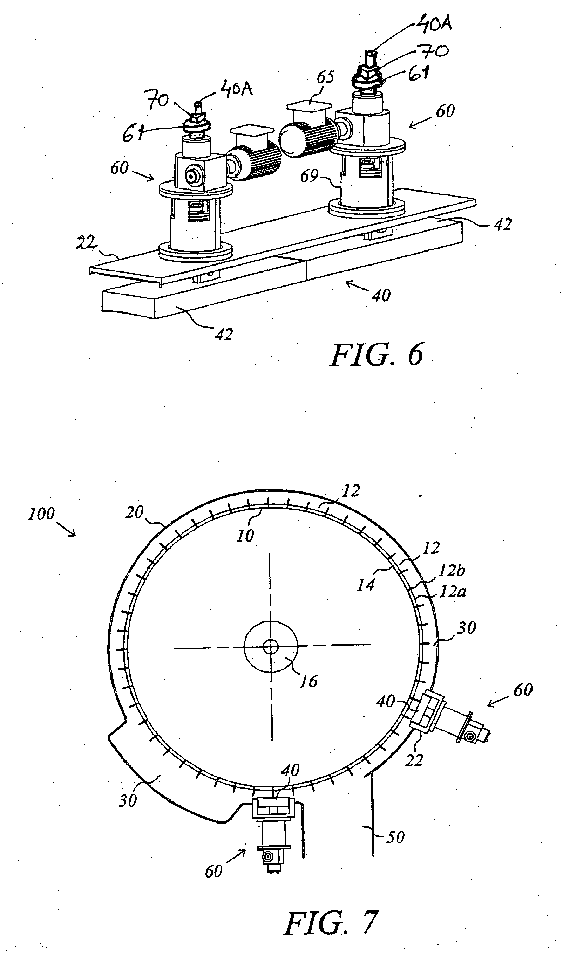

According to one embodiment of the invention the mechanism for force measurement comprises more than one device for force measurement for each seal. This is illustrated in Fig. 6, which shows a longitudinal seal 40 provided with two devices 60 for force measurement, one adjacent to each end. These force measurement devices 60 might be comprised in units 60A, which preferably are provided with functionally separate, i.e. individually controlled movement means, whereby different parts 42 of the seal 40 can be moved independently of each other. The movement means in Fig. 6 is partly surrounded by the support structure 69, but its motor 65 and jack 66 can be seen in the figure. In that way an efficient sealing is provided also in those cases when the seal 40 e.g. is unevenly worn or objects having entered between the seal and the drum (10 in Fig. 4A) only affect part of the seal 40. In order to facilitate the movement of the respective seal part 42 the connection between the cylinder and the seal 40 is articulated in this case. The movement of the cylinder still takes place mainly in the radial direction of the drum.

As has been mentioned earlier the longitudinal seal 40 consists according to a preferred embodiment of a polymer material. Hereby a supporting part of plate or the like (not shown) of a more stiff material is arranged in connection with the seal in order to prevent undesired bending of the same. Embodiments where intermediate parts are arranged between the seal and the casing 20 thus lie within the scope of the invention.

Again with reference to Fig. 4A and 4B the device 60 for force measurement according to the invention is provided with a spring means 48, typically arranged such that it surrounds the cylinder 67 with a movable part closest to the drum and a stationary point farthest from the drum 10. A function of the spring means is that it functions as a heavy emergency action for moving the seal, e.g. if the motor should be out of order and some object enters between the seal and the drum.

On further embodiment of the invention gives a safer sealing function for the washing drum in cases, wherein a plurality of devices 60 for measuring force are present. The devices 60 might be arranged in connection with the same (Fig. 6) or different seals (Fig. 3 and Fig. 7) and might function in normal operation either independently of each other without communication between themselves or in mutual communication.

There may also be embodiments, wherein some longitudinal seals of the washing apparatus are provided with devices for force measurement while others lack this functionality. Such applications of course also lie within the scope of the invention. Normally it is most important to optimize the function of those seals adjoining a formation zone and an output zone of the drum, respectively. According to one embodiment of the invention, illustrated in Fig. 7, force measurement according to the invention is only present with reference to the first and the last seal of the washing apparatus.

Fig. 8 is a schematic block diagram of a unit 60A for seal adjustment according to a preferred embodiment of the invention. The illustrated unit 60A for seal adjustment, comprising a device 60 for force measurement as has been described above, comprises a measurement means 61 for force measurement, e.g. a load cell or a pressure gauge, from which measurement signals are transferred to a controller/function 63, e.g. a computer program with particular adopted control algorithms. This normally takes place automatically with chosen, relatively short time intervals, which gives a substantially continuous seal adjustment. The unit 60A for seal adjustment comprises an extraction means 62, which is adopted to extract (i.e. read out, bring forward or calculate) a value of a force or a parameter from the signal that is recorded with the measurement means 61. The extraction means 62 is preferably computer bases and integrated with the control unit 63, as in Fig. 8. Other variants are however also conceivable.

The control unit 63 communicates in its turn with a driver means 65 which drives the movement of the seal and is thus comprised in the movement means 64 of the unit 60A. The driver means can for example be an electric motor or a hydraulic driver unit. The position of the seal is governed by transferring the driver movement of the driver means 65 to a positioning means 67, e.g. a cylinder which is physically connected with the seal and arranged to eep the seal in a desried position mainly in a radial direction. This can be done directly or through on or several mediation elements 66. One example of such a mediation element is the jack in Fig. 4A and 4B, but depending on among other things the character of the driver means 65, other functional units might be used for transferring driving force to movement at the positioning means 67.

As has been mentioned above the movement means 64 also comprises a spring force based means 68 which, through the positioning means 67 moves the seal when the upper capacity limit of the driver means 65 has been reached. Further the movement means according to some applications can be adopted for movement of the longitudinal seal based also on one or several pressures in the surroundings of the seal. The illustrated adjustment unit 60A includes a unit 62 for pressure measurement, which communicates with the control unit 63 in order to make possible seal adjustment based also on one or several pressures in the surroundings at the lateral surfaces or the outside of the seal.

It is inherent that the above described method for seal adjustment can be varied within the scope of the invention.

## Claims

1. A method for force measurement of forces acting on at least one seal (40) with a device (60) in a washing apparatus (100) for washing and dewatering of cellulosic pulp, comprising a rotary drum (10) with a plurality of outer compartments (12) on the drum for the pulp to be washed, which compartments are defined by axial compartment walls (12b) distributed along the perimeter of the drum, a stationary casing (20) surrounding the drum, whereby an annular space (30) is defined between the casing and the drum, wherein the annular space is divided into zones (F, T1, T2, U) by longitudinal seals (40) extending in the axial direction of the drum for formation, washing and output of the pulp, and wherein the device for force measurement comprises a load transmission shaft (40A), which has an extension mainly through the device (60) for force measurement in the radial direction of the drum, having a first end (40B) in connection with which the longitudinal seal is intended to be provided, a spring package (68) for transmission of driving force to the seal, **characterized by** the steps
measuring the biasing force of the spring package (68) for force measurement during shutdown of the washing apparatus with a measuring means (61),
measuring a force acting on the load transmission shaft (40A) during operation with the measuring device (61), and
extraction of a force acting against the longitudinal seal (40) in a direction away from the drum, from the measured biasing force of the spring package (68) and the measured force acting on the load transmission shaft (40A) during operation.

2. The method for force measurement with a device (60) according to claim 1, **characterized in that** the extraction of the force acting against the longitudinal seal (40) in a direction away from the drum is obtained by subtraction of the measured force under operation from the measured biasing force of the spring package (68) during shutdown.

3. The method for force measurement with a device (60) according to claim 1 or 2, **characterized in that** the measuring means (61) is arranged in indirect connection with the load transmission shaft (40A) through an element (70) so that the biasing force of the spring package (68) during shutdown can be measured by the measuring means (61) and so that a traction force acting on the load transmission shaft (40A) during operation can be measured as a compressive force of the same magnitude by the measuring means (61).

4. The method for force measurement with a device (60) according to any of the preceding claims, **characterized in that** the measuring means (61) is arranged in connection with a second outer end (40C) of the load transmission shaft (40A) on the side of the jack (66) that is turned in a direction away from the casing (20).

5. A method for seal adjustment with a unit (60A), **characterized in that** movement of the longitudinal seal (40) is performed substantially in the radial direction of the drum with the aid of movement means (64) based on the force measured by the measuring means (61) according to the method according to any of the preceding claims.

6. A device (60) for force measurement of forces acting on at least one seal (40) in a washing apparatus (100) for washing and dewatering of cellulosic pulp, which washing apparatus comprises a rotary drum (10) with a plurality of outer compartments (12) on the drum for pulp to be washed, which compartments are defined by axial compartment walls (12b) distributed along the perimeter of the drum, a stationary cylindrical casing (20), which surrounds the drum, whereby an annular space (30) is defined between the casing and the drum and wherein the annular space is divided into zones (F, T1, T2, U) by longitudinal seals (40) in the axial direction of the drum for formation, washing and output of the pulp, and wherein the device for force measurement comprises a load transmission shaft (40A) having an extension substantially through the device (60) in the radial direction of the drum with a first outer end (40B) in connection with which the longitudinal seal is arranged, a spring package (68) intended for biasing of the device (60), a jack (66) for the transfer of a driving force to the seal, **characterized by**
measuring means (61) for measurement of the biasing force of the spring package (68) during shutdown and measurement of a force acting on the load transmission shaft (40A) under operation; and
extraction means (62) for extraction of a force acting against the longitudinal seal (40) in a direction away from the drum, from the measured biasing force of the spring package (68) and the measured force acting on the load transmission shaft (40A) during operation.

7. The device (60) for force measurement according to claim 6, **characterized in that** the measuring means (61) is integrated in the load transmission shaft (40A).

8. The device (60) for force measurement according to claim 6, **characterized in that** the measuring means (61) is arranged in connection with a second outer end (40C) of the load transmission shaft (40A), in indirect connection with the load transmission shaft (40A) through an element (70).

9. The device (60) for force measurement according to claim 8, **characterized in that** the measuring means (61) is arranged on that side of the jack (66) that is turned in a direction away from the casing (20).

10. The device (60) for force measurement according to claim 9, **characterized in that** the measuring means (61) is mounted on a protruding part (L) of the load transmission shaft (40A) between the jack (66) and a fastening element (70).

11. A unit for seal adjustment (60A), **characterized in that** it comprises a device (60) for force measurement according to any of the preceding claims 6 - 10.

12. The unit for seal adjustment (60A) according to claim 11, **characterized in that** it comprises movement means (64) for movement of the longitudinal seal (40) substantially in the radial direction of the drum based on the force measured with the measuring means (61).

13. A washing apparatus (100) for washing and dewatering the cellulosic pulp, comprising a rotary drum (10) with a plurality of outer compartments (12) on the drum for the pulp to be washed, which compartments are defined by axial compartment walls (12b) distributed along the perimeter of the drum, a stationary cylindrical casing (20) surrounding the drum, whereby an annular space (30) is defined between the casing and the drum and wherein the annular space is divided into zones (F, T1, T2, U) by longitudinal seals (40) in the axial direction of the drum for formation, washing and output of the pulp, **characterized by** a device for force measurement (60) according to any of the claims 6 - 10 and/or a unit (60A) for seal adjustment according to any of the claims 11 - 12.

## Patentansprüche

1. Verfahren zur Kraftmessung von Kräften, welche auf wenigstens eine Dichtung (40) wirken, mit einer Vorrichtung (60) in einer Waschanordnung (100) zum Waschen und Entwässern von Zellstoffpulpe, umfassend eine Drehtrommel (10) mit einer Mehrzahl von äußeren Kammern (12) auf der Trommel für die Pulpe, die gewaschen werden soll, wobei die Kammern durch axiale Kammerwände (12b), welche entlang des Umfangs der Trommel verteilt sind, definiert sind, und ein ortsfestes Gehäuse (20), welches die Trommel umgibt, wobei ein ringförmiger Abstand (30) zwischen dem Gehäuse und der Trommel definiert ist, wobei der ringförmige Abstand in Zonen (F, T1, T2, U) durch Längsdichtungen (40) geteilt ist, welche sich in axialer Richtung der Trommel für Ausbildung, Waschen und Ausgabe der Pulpe erstrecken, und wobei die Vorrichtung zur Kraftmessung eine Lastübertragungswelle (40A), welche eine Verlängerung hauptsächlich durch die Vorrichtung (60) zur Kraftmessung in der radialen Richtung der Trommel aufweist, mit einem ersten Ende (40B), wobei in Verbindung mit diesem die Längsdichtung bereitgestellt werden soll, und ein Federpaket (68) zur Übertragung der Antriebskraft auf die Dichtung umfasst, **gekennzeichnet durch** die Schritte
Messen der Vorspannkraft des Federpakets (68) zur Kraftmessung während der Abschaltung der Wascheinrichtung mit einem Messmittel (61),
Messen einer Kraft, welche auf die Lastübertragungswelle (40A) während des Betriebs wirkt, mit einer Messvorrichtung (61) und
Gewinnung einer Kraft, welche gegen die Längsdichtung (40) in eine Richtung weg von der Trommel wirkt, aus der gemessenen Vorspannkraft des Federpakets (68) und der gemessenen Kraft, welche auf die Lastübertragungswelle (40A) während des Betriebs wirkt.

2. Verfahren zur Kraftmessung mit einer Vorrichtung (60) nach Anspruch 1, **dadurch gekennzeichnet, dass** die Gewinnung der Kraft, welche gegen die Längsdichtung (40) in eine Richtung weg von der Trommel wirkt, durch Subtraktion der gemessenen Kraft unter Betrieb von der gemessenen Vorspannkraft des Federpakets (68) während der Abschaltung erzielt wird.

3. Verfahren zur Kraftmessung mit einer Vorrichtung (60) nach Anspruch 1 oder 2, **dadurch gekennzeichnet, dass** das Messmittel (61) in indirekter Verbindung mit der Lastübertragungswelle (40A) durch ein Element (70) angeordnet ist, so dass die Vorspannkraft des Federpakets (68) während der Abschaltung durch das Messmittel (61) gemessen werden kann und so dass eine Traktionskraft, welche auf die Lastübertragungswelle (40A) während des Betriebs wirkt, als eine Druckkraft der gleichen Größenordnung durch das Messmittel (61) gemessen werden kann.

4. Verfahren zur Kraftmessung mit einer Vorrichtung (60) nach jedem beliebigen der vorangehenden Ansprüche, **dadurch gekennzeichnet, dass** das Messmittel (61) in Verbindung mit einem zweiten äußeren Ende (40C) der Lastübertragungswelle (40A) auf der Seite der Buchse (66) angeordnet ist, die in eine Richtung weg vom Gehäuse (20) gedreht ist.

5. Verfahren zur Dichtungsanpassung mit einer Einheit (60A), **dadurch gekennzeichnet, dass** Bewegung der Längsdichtung (40) im Wesentlichen in die radiale Richtung der Trommel mit Hilfe von Bewegungsmitteln (64) auf der Grundlage der Kraft, welche durch das Messmittel (61) nach dem Verfahren nach jedem beliebigen der vorangehenden Ansprüche gemessen wird, ausgeführt wird.

6. Vorrichtung (60) zur Kraftmessung von Kräften, welche auf wenigstens eine Dichtung (40) in einer Wascheinrichtung (100) zum Waschen und Entwässern von Zellstoffpulpe wirken, wobei die Wascheinrichtung eine Drehtrommel (10) mit einer Mehrzahl von äußeren Kammern (12) auf der Trommel für die Pulpe, die gewaschen werden soll, wobei die Kammern durch axiale Kammerwände (12b), welche entlang des Umfangs der Trommel verteilt sind, definiert sind, und ein ortsfestes Gehäuse (20) umfasst, welches die Trommel umgibt, wobei ein ringförmiger Abstand (30) zwischen dem Gehäuse und der Trommel definiert ist, wobei der ringförmige Abstand in Zonen (F, T1, T2, U) durch Längsdichtungen (40) geteilt ist, welche sich in axialer Richtung der Trommel für Ausbildung, Waschen und Ausgabe der Pulpe erstrecken, und wobei die Vorrichtung zur Kraftmessung eine Lastübertragungswelle (40A), welche eine Verlängerung hauptsächlich durch die Vorrichtung (60) zur Kraftmessung in der radialen Richtung der Trommel aufweist, mit einem ersten Ende (40B), wobei in Verbindung mit diesem die Längsdichtung bereitgestellt werden soll, ein Federpaket (68), welches zum Vorspannen der Vorrichtung (60) dienen soll, und eine Buchse (66) zur Übertragung der Antriebskraft auf die Dichtung umfasst, **gekennzeichnet durch**
ein Messmittel (61) zum Messen der Vorspannkraft des Federpakets (68) während der Abschaltung und zum Messen einer Kraft, welche auf die Lastübertragungswelle (40A) während des Betriebs wirkt; und
ein Extraktionsmittel (62) zur Gewinnung einer Kraft, welche gegen die Längsdichtung (40) in eine Richtung weg von der Trommel wirkt, aus der gemessenen Vorspannkraft des Federpakets (68) und der gemessenen Kraft, welche auf die Lastübertragungswelle (40A) während des Betriebs wirkt.

7. Vorrichtung (60) zur Kraftmessung nach Anspruch 6, **dadurch gekennzeichnet, dass** das Messmittel (61) in die Lastübertragungswelle (40A) integriert ist.

8. Vorrichtung (60) zur Kraftmessung nach Anspruch 6, **dadurch gekennzeichnet, dass** das Messmittel (61) in Verbindung mit einem zweiten Ende (40C) der Lastübertragungswelle (40A) in indirekter Verbindung mit der Lastübertragungswelle (40A) durch ein Element (70) angeordnet ist.

9. Vorrichtung (60) zur Kraftmessung nach Anspruch 8, **dadurch gekennzeichnet, dass** das Messmittel (61) auf jener Seite der Buchse (66) angeordnet ist, welche in eine Richtung weg vom Gehäuse (20) gedreht ist.

10. Vorrichtung (60) zur Kraftmessung nach Anspruch 9, **dadurch gekennzeichnet, dass** das Messmittel (61) auf einem vorragenden Teil (L) der Lastübertragungswelle (40A) zwischen der Buchse (66) und einem Befestigungselement (70) angebracht ist.

11. Einheit zur Dichtungsanpassung (60A), **dadurch gekennzeichnet, dass** sie eine Vorrichtung (60) zur Kraftmessung nach einem beliebigen der Ansprüche 6-10 umfasst.

12. Einheit zur Dichtungsanpassung (60A) nach Anspruch 11, **dadurch gekennzeichnet, dass** sie Bewegungsmittel (64) zur Bewegung der Längsdichtung (40) im Wesentlichen in der radialen Richtung der Trommel auf Grundlage der Kraft, welche durch das Messmittel (61) gemessen wird, umfasst.

13. Wascheinrichtung (100) zum Waschen und Entwässern der Zellstoffpulpe, umfassend eine Drehtrommel (10) mit einer Mehrzahl von äußeren Kammern (12) auf der Trommel für die Pulpe, die gewaschen werden soll, wobei die Kammern durch axiale Kammerwände (12b), welche entlang des Umfangs der Trommel verteilt sind, definiert sind, und ein ortsfestes Gehäuse (20), welches die Trommel umgibt, wobei ein ringförmiger Abstand (30) zwischen dem Gehäuse und der Trommel definiert ist und wobei der ringförmige Abstand in Zonen (F, T1, T2, U) durch Längsdichtungen (40) in der axialen Richtung der Trommel für Ausbildung, Waschen und Ausgabe der Pulpe geteilt ist, **gekennzeichnet durch** eine Vorrichtung zur Kraftmessung (60) nach einem beliebigen der Ansprüche 6-10 und/oder eine Einheit (60A) zur Dichtungsanpassung nach jedem beliebigen der Ansprüche 11-12.

## Revendications

1. Procédé pour la mesure de force de forces agissant sur au moins un joint (40) avec un dispositif (60) dans un appareil de lavage (100) pour le lavage et la déshydratation de pulpe cellulosique, comprenant un tambour rotatif (10) avec une pluralité de compartiments extérieurs (12) sur le tambour pour que la pulpe soit lavée, lesquels compartiments sont définis par des parois de compartiment axiales (12b) réparties le long du périmètre du tambour, une enveloppe immobile (20) entourant le tambour, de sorte qu'un espace annulaire (30) est défini entre l'enveloppe et le tambour, dans lequel l'espace annulaire est divisé en zones (F, T1, T2, U) par des joints longitudinaux (40) s'étendant dans la direction axiale du tambour pour la formation, le lavage et la sortie de la pulpe, et dans lequel le dispositif pour la mesure de force comprend un arbre de transmission de charge (40A), qui a une extension principalement à travers le dispositif (60) pour la mesure de force dans la direction radiale du tambour, ayant une première extrémité (40B) en relation avec laquelle le joint longitudinal est destiné à être fourni, un boîtier élastique (68) pour la transmission de force d'entraînement au joint, **caractérisé par** les étapes de
mesure de la force de déplacement du boîtier élastique (68) pour la mesure de force pendant l'arrêt de l'appareil de lavage avec un moyen de mesure (61),
mesure d'une force agissant sur l'arbre de transmission de charge (40A) pendant le fonctionnement avec le dispositif de mesure (61), et
extraction d'une force agissant contre le joint longitudinal (40) dans un sens s'éloignant du tambour, depuis la force de déplacement mesurée du boîtier élastique (68) et la force mesurée agissant sur l'arbre de transmission de charge (40A) pendant le fonctionnement.

2. Procédé pour la mesure de force avec un dispositif (60) selon la revendication 1, **caractérisé en ce que** l'extraction de la force agissant contre le joint longitudinal (40) dans un sens s'éloignant du tambour est obtenue par soustraction de la force mesurée en fonctionnement depuis la force de déplacement mesurée du boîtier élastique (68) pendant l'arrêt.

3. Procédé pour la mesure de force avec un dispositif (60) selon la revendication 1 ou 2, **caractérisé en ce que** le moyen de mesure (61) est agencé dans une relation indirecte avec l'arbre de transmission de charge (40A) par l'intermédiaire d'un élément (70) de sorte que la force de déplacement du boîtier élastique (68) pendant l'arrêt peut être mesurée par le moyen de mesure (61) et de sorte qu'une force de traction agissant sur l'arbre de transmission de charge (40A) pendant le fonctionnement peut être mesurée comme une force de compression de la même amplitude par le moyen de mesure (61).

4. Procédé pour la mesure de force avec un dispositif (60) selon l'une quelconque des revendications précédentes, **caractérisé en ce que** le moyen de mesure (61) est agencé en relation avec une seconde extrémité extérieure (40C) de l'arbre de transmission de charge (40A) sur le côté du plot (66) qui est tourné dans un sens s'éloignant de l'enveloppe (20).

5. Procédé pour l'ajustement de joint avec une unité (60A), **caractérisé en ce qu'**un mouvement du joint longitudinal (40) est effectué sensiblement dans la direction radiale du tambour à l'aide d'un moyen de mouvement (64) en se basant sur la force mesurée par le moyen de mesure (61) selon le procédé selon l'une quelconque des revendications précédentes.

6. Dispositif (60) pour la mesure de force de forces agissant sur au moins un joint (40) dans un appareil de lavage (100) pour le lavage et la déshydratation de pulpe cellulosique, lequel appareil de lavage comprend un tambour rotatif (10) avec une pluralité de compartiments extérieurs (12) sur le tambour pour que la pulpe soit lavée, lesquels compartiments sont définis par des parois de compartiment axiales (12b) réparties le long du périmètre du tambour, une enveloppe cylindrique immobile (20), qui entoure le tambour, de sorte qu'un espace annulaire (30) est défini entre l'enveloppe et le tambour et dans lequel l'espace annulaire est divisé en zones (F, T1, T2, U) par des joints longitudinaux (40) dans la direction axiale du tambour pour la formation, le lavage et la sortie de la pulpe, et dans lequel le dispositif pour la mesure de force comprend un arbre de transmission de charge (40A) ayant une extension sensiblement à travers le dispositif (60) dans la direction radiale du tambour avec une première extrémité extérieure (40B) en relation avec laquelle le joint longitudinal est agencé, un boîtier élastique (68) destiné à solliciter le dispositif (60), un plot (66) pour le transfert d'une force d'entraînement au joint, **caractérisé par**
un moyen de mesure (61) pour la mesure de la force de déplacement du boîtier élastique (68) pendant l'arrêt et pour la mesure d'une force agissant sur l'arbre de transmission de charge (40A) en fonctionnement ; et
un moyen d'extraction (62) pour l'extraction d'une force agissant contre le joint longitudinal (40) dans un sens s'éloignant du tambour, depuis la force de déplacement mesurée du boîtier élastique (68) et de la force mesurée agissant sur l'arbre de transmission de charge (40A) pendant le fonctionnement.

7. Dispositif (60) pour la mesure de force selon la revendication 6, **caractérisé en ce que** le moyen de mesure (61) est intégré dans l'arbre de transmission de charge (40A).

8. Dispositif (60) pour la mesure de force selon la revendication 6, **caractérisé en ce que** le moyen de mesure (61) est agencé en relation avec une seconde extrémité extérieure (40C) de l'arbre de transmission de charge (40A), en relation indirecte avec l'arbre de transmission de charge (40A) par l'intermédiaire d'un élément (70).

9. Dispositif (60) pour la mesure de force selon la revendication 8, **caractérisé en ce que** le moyen de mesure (61) est agencé sur ce côté du plot (66) qui est tourné dans un sens s'éloignant de l'enveloppe (20).

10. Dispositif (60) pour la mesure de force selon la revendication 9, **caractérisé en ce que** le moyen de mesure (61) est monté sur une partie saillante (L) de l'arbre de transmission de charge (40A) entre le plot (66) et un élément d'attache (70).

11. Unité pour l'ajustement de joint (60A), **caractérisée en ce qu'**elle comprend un dispositif (60) pour la mesure de force selon l'une quelconque des revendications précédentes 6 à 10.

12. Unité pour l'ajustement de joint (60A) selon la revendication 11, **caractérisée en ce qu'**elle comprend un moyen de mouvement (64) pour le mouvement du joint longitudinal (40) sensiblement dans la direction radiale du tambour en se basant sur la force mesurée avec le moyen de mesure (61).

13. Appareil de lavage (100) pour le lavage et la déshydratation de la pulpe cellulosique, comprenant un tambour rotatif (10) avec une pluralité de compartiments extérieurs (12) sur le tambour pour que la pulpe soit lavée, lesquels compartiments sont définis par des parois de compartiment axiales (12b) réparties le long du périmètre du tambour, une enveloppe cylindrique immobile (20) entourant le tambour, de sorte qu'un espace annulaire (30) est défini entre l'enveloppe et le tambour et dans lequel l'espace annulaire est divisé en zones (F, T1, T2, U) par des joints longitudinaux (40) dans la direction axiale du tambour pour la formation, le lavage et la sortie de la pulpe, **caractérisé par** un dispositif pour la mesure de force (60) selon l'une quelconque des revendications 6 à 10 et/ou une unité (60A) pour l'ajustement de joint selon l'une quelconque des revendications 11 et 12.
